# EUROPEAN PATENT APPLICATION

(11) **EP 4 407 880 A1**
(43) Date of publication of application: **31.07.2024**
(21) Application number: 23152999.1
(22) Date of filing: 24.01.2023
(51) Int. Cl.: H04B 5/00, E05B 85/10, G07C 9/00, H01Q 1/32

(54) **HANDLE FOR A CAR DOOR COMPRISING A NEAR FIELD COMMUNICATION UNIT**

(71) Applicant: MINEBEA ACCESSSOLUTIONS ITALIA S.P.A., 10044 Pianezza (IT)
(72) Inventor: GUERIN, Anthony, 10044 PIANEZZA (IT); ROCCI, Antonio, 10044 PIANEZZA (IT); SAVANT, Marco, 10044 PIANEZZA (IT)
(74) Representative: Germain Maureau

(57) **Abstract**

Handle (1) for a car door comprising : a near field communication unit (5) having a microchip and an antenna (9), said antenna (9) being provided with a coil (11) and an elongated connection part (13) configured for cooperating with the microchip, a body (15), an overmolded portion (19) formed on the body (15) and defining an encapsulating zone including entirely the coil (11) and partially the elongated connection part (13), the elongated connection part (13) comprising a terminal portion including a cooperation extremity configured to cooperate with the microchip, said terminal portion being outside the encapsulated zone.

## Description

### Field of the invention

The present invention concerns a handle for a car door comprising a near field communication unit.

### Prior art

It is known to have a handle for a car door that can be actuated thanks to electric means for locking, unlocking or opening the door. There is a need to have a sensor or communication means on or near the handle to facilitate the actuation.

It is also known to design the handle according to several shapes extending externally from the car door. It engenders a protruding part that can be grabbed by a user.

This protruding part can for example present a wing form starting from the car door with a transverse portion, an elbow portion and a terminal portion extending obliquely to or parallel to the car door. This kind of construction is advantageous because it enables the user to easily grab the handle and move the car door.

However, when the handle presents such a protruding form it becomes challenging to include the electric means for actuating the car door on or near the handle.

There is a lack of space and a common solution is to separate the electric means from the handle and install the electric means next to the handle under the form of a touch button for example.

This solution is not ideal as the user has to realize two tasks to actuate the door: touch the button and grab the handle.

The present invention aims to solve all or some of the disadvantages mentioned above.

### Summary of the invention

For this purpose, the present invention relates to a handle for a car door comprising:
a near field communication unit having a microchip and an antenna, said antenna being provided with a coil and an elongated connection part configured for cooperating with the microchip,
a body configured to be fixed on the car door the body presenting a reception area configured to receive the antenna,
an overmolded portion formed on the body and defining an encapsulating zone including entirely the coil and partially the elongated connection part, the elongated connection part comprising a terminal portion including a cooperation extremity configured to cooperate with the microchip, said terminal portion being outside the encapsulated zone.

Here, the near communication field unit is constructed with distinct parts that are linked but located at different places. The coil in its entirety and the elongated connection part partially are located within the encapsulating zone. The terminal portion and the microchip are outside the encapsulating zone.

This provision is advantageous because it implies that the microchip is located remotely from the measuring location that is near the coil. The microchip is protected for example from humidity. The handle can present various external forms and can be thin, the coil occupying little space. The coil as a detection part can then be advantageously located for an easy actuating.

The coil and the elongated connection part also present a reduced thickness: they are easy to place on the body. They are not particularly delicate so that adding the overmolded portion do not cause any damage on the near field communication unit.

There is therefore more freedom for defining the external form of the handle by the combination of the body and the overmolded portion. The handle can present a gripping side with a limited thickness.

The near field communication unit is configured to communicate or exchange data with a near field communication pass owned by a user of the car. The communication of data enables to open the door of the car, lock or unlock the door.

The body is for example made in PBT. The overmolded portion can be made in PC/ABS.

According to an aspect of the invention, the handle also comprises metal covering layer formed on the overmolded portion and/or on the body, the overmolded portion presenting a free external area in front of the coil according to a winding axis of the coil so as to allow near field communication exchanges.

In other words, provided that there is a free external area, the handle can have a metal covering layer. This metal covering layer can be a decoration.

By free external area, it has to be understood that no element susceptible to reduce the efficiency of near filed communication is located on the free external area. In particular, the metal covering layer does not extend on the free external area.

Elements as plastic can still be added on the free external area because they do not disturb near field communication exchanges. A painting layer can also be added to the free external area.

According to a possibility, the free external area can present a unique area item with a closed contour as a rectangle, possibly with rounded angles. Other forms are also possible.

According to another possibility, the free external area can present several area items, each item being defined by its own contour. It thus appear that the free external area can have a decorative aspect. A logo or an inscription can be created.

According to an aspect of the invention, the metal covering layer is a chromed layer.

This provision enables to have a handle provided with a chromed layer on the exterior and also with a near field communication unit. This chromed layer might be created by a galvanic process as explained below.

According to a first possibility, the antenna is constituted by a copper wire forming the coil and the elongated connection part, said wire comprising two extremities configured to be welded to the microchip or to the printed circuit board.

According to this possibility, the elongated connection part is constituted of two parallel fractions of the cooper wire and the coil is a winding. The winding can be a joined winding or each loop can be spaced from the adjacent one by for example a 0,5 mm gap. The copper wire can have a 0,2 mm diameter and the winding can have a thickness of 3 mm.

According to a second possibility, the antenna is constituted by a copper wire forming the coil and the elongated connection part and a neutral material frame supporting the coil and/or the elongated connection part.

The neutral material frame is in a material that has no electrical propriety, for example in resin. The neutral material frame serves as a holder for maintaining in position the coil. For example 0,5 mm gap can be set between each adjacent loop of the coil. Also here, the copper wire can have a 0,2 mm diameter and the winding can have a thickness of 3 mm.

According to a third possibility, the antenna is constituted by a flexible printed circuit board including a substrate and conductive tracks defining the coil and the elongated connection part.

The cooperation extremity of the elongated connection part has two terminals configured to cooperate with the microchip, for example by a welding.

This provision simplifies the manufacturing of the handle because the printed circuit board can easily be added on the body.

According to an aspect of the invention, the reception area for the antenna is a trench made in the body.

This provision facilitates the positioning of the antenna within the reception area.

According to an aspect of the invention, the body comprises a bridge configured to cooperate with a superior edge of the car door extending according to a basis plane, the body also including a foot linked to the bridge and located in an interior side of the car with respect to the superior edge, a rigid printed circuit board of the handle being mounted on the foot, said rigid printed circuit board supporting the microchip. Alternatively, the rigid printed circuit board can be located in an external box, which can be placed at any position inside the door.

The position of the foot enables to protect the microchip of the antenna. The foot comprises a cover for protecting the rigid printed circuit board.

According to an aspect of the invention, the body comprises a wing linked to the bridge and located in an exterior side of the car with respect to the superior edge, the reception area being located partially on the wing, in particular for receiving the coil.

As the microchip is not located on the wing of the handle that is manipulated by the user, the wing can be thin.

According to an aspect of the invention, the wing extends obliquely to or in parallel to the basis plane. This facilitates the grabbing of the handle. The bridge and the handle can form an elbow.

The present invention also concerns a method for manufacturing of a handle for a car door as detailed above, comprising the following steps:
providing the body, then
positioning the antenna in the reception area of the body, then
installing the body in a mold, the mold presenting a passage opening for inserting the terminal portion outside of a molding area, the passage opening being arranged to be tight when the terminal portion is inserted, then
creating the overmolded portion by injection within the molding area.

This provision enables to obtain an antenna almost entirely fit between the body and the overmolded portion. Only the terminal portion remains outside the overmolded portion so that it can be fixed to the microchip.

Preferably, after creating the overmolded portion, there is a step of fixing the cooperation extremity of the terminal portion to the microchip. In particular, the cooperation extremity is welded to the microchip or to the printed circuit board.

According to an aspect of the invention, the method for manufacturing further comprises:
a step of fixing the cooperation extremity of the terminal portion to the microchip, in particular by welding,
a step of coating the overmolded portion and/or on the body with a metal covering layer.

The microchip is distant from the metal covering layer. It thus becomes possible to design a thin overmolded portion with a metal covering layer.

Alternatively, the metal covering layer can be glued.

According to an aspect of the invention, the step of coating consists in applying an ink for preventing galvanic process on the free external area and then consists in forming the metal covering layer thanks to a galvanic process.

It is thus possible to add to the handle a metal covering layer while leaving a free external area to assure a good antenna functioning.

The different aspects defined above that are not incompatible can be combined.

### Brief description of the figures

The invention will be better understood with the aid of the detailed description that is set out below with reference to the appended drawing in which:
- figure 1 is a perspective view of a detail of a body and an antenna of a handle,
- figure 2 is a front view of the handle wherein the antenna is visible by transparency,
- figure 3 is an exploded perspective view of the body and the antenna of the handle,
- figure 4 is a perspective view of the handle installed on a car door,
- figure 5 is a perspective view of the rear of the body schematically representing the passage opening of a mold for maintaining a terminal portion of the antenna outside an overmolded portion of the handle
- figure 6 is a diagram representing the steps of a method for manufacturing the handle.

### Description with reference to the figures

In the following detailed description of the figures defined above, the same elements or the elements that are fulfilling identical functions may retain the same references so as to simplify the understanding of the invention.

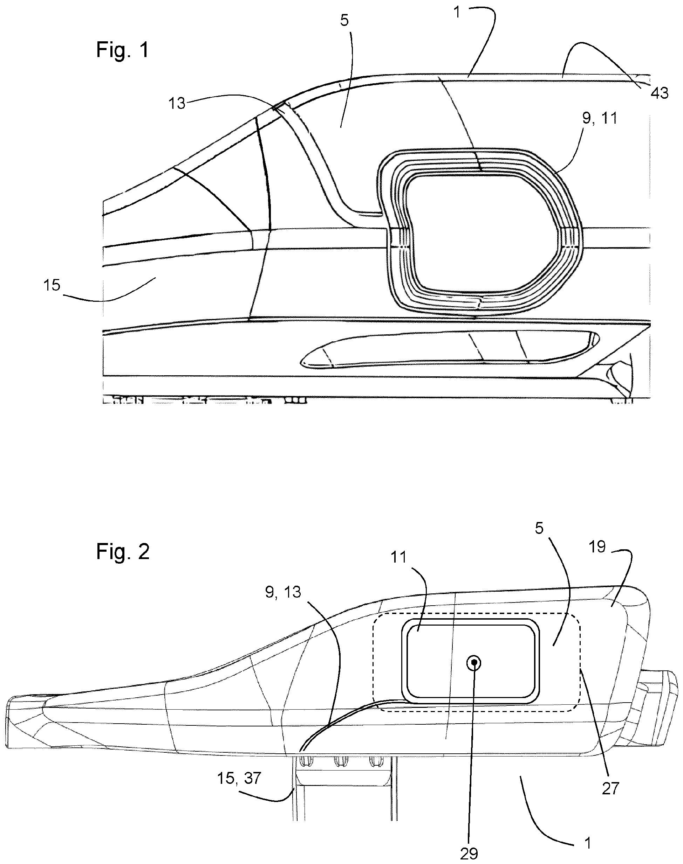

As illustrated in figures 1 to 5, a handle 1 for a car door 3 comprises a near field communication unit 5 having a microchip 7 and an antenna 9, said antenna 9 being provided with a coil 11 and an elongated connection part 13 configured for cooperating with the microchip 7.

The handle 1 comprises a body 15 configured to be fixed on the car door 3, the body 15 presenting a reception area 17 configured to receive the antenna 9.

The handle 1 also comprises an overmolded portion 19 formed on the body 15 and defining an encapsulating zone including entirely the coil 11 and partially the elongated connection part 13.

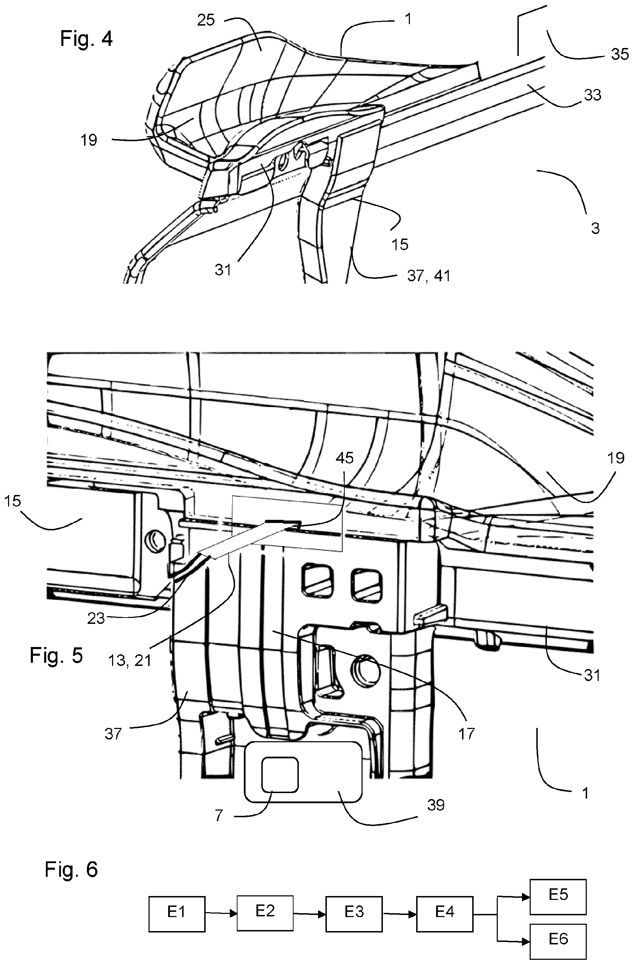

As shown on figure 5, the elongated connection part 13 comprises a terminal portion 21 including a cooperation extremity 23 configured to cooperate with the microchip 7, said terminal portion 23 being outside the encapsulated zone.

Here, the near communication field unit 5 is constructed with distinct parts that are linked but located at different places. The coil 11 in its entirety and the elongated connection part 13 partially are located within the encapsulating zone. The terminal portion 23 and the microchip 7 are outside the encapsulating zone.

The near field communication unit 5 is configured to communicate or exchange data with a near field communication pass owned by a user of the car. The communication of data enables to open the door of the car, lock or unlock the door.

The body 15 is for example made in PBT. The overmolded portion 19 can be made in PC/ABS.

The handle 1 comprises a metal covering layer 25 formed on the overmolded portion 19 and/or on the body 15 as depicted on figure 4.

The overmolded portion 19 presents a free external area 27 in front of the coil 11 according to a winding axis 29 of the coil 11 so as to allow near field communication exchanges.

In other words, provided that there is a free external area 27, the handle 1 can have a metal covering layer 25. This metal covering layer 25 can be a decoration.

By free external area 27, it has to be understood that no element susceptible to reduce the efficiency of near filed communication is located on the free external area 27. In particular, the metal covering layer 25 does not extend on the free external area 27.

Elements as plastic can still be added on the free external area 27 because they do not disturb near field communication exchanges. A painting layer can also be added to the free external area 27.

The free external area 27 can present a unique area item with a closed contour as a rectangle, possibly with rounded angles. Other forms are also possible.

According to another possibility, the free external area 27 can present several separated area items, each item being defined by its own contour. It thus appear that the free external area 27 can have a decorative aspect. A logo or an inscription can be created.

Here, the metal covering layer 25 is a chromed layer. This chromed layer might be created by a galvanic process as explained below.

According to a first possibility depicted on figure 2, the antenna 9 is constituted by a copper wire forming the coil 11 and the elongated connection part 13, said wire comprising two extremities configured to be welded to the microchip 7 or to the printed circuit board 39.

According to this possibility, the elongated connection part 13 is constituted of two parallel fractions of the cooper wire and the coil 11 is a winding. The winding can be a joined winding or each loop can be spaced from the adjacent one by for example a 0,5 mm gap. The copper wire can have a 0,2 mm diameter and the winding can have a thickness of 3 mm.

According to a second possibility depicted on figure 1, the antenna 9 is constituted by a copper wire forming the coil 11 and the elongated connection part 13 and a neutral material frame supporting the coil 11 and/or the elongated connection part 13.

The neutral material frame is in a material that has no electrical propriety, for example in resin. The neutral material frame serves as a holder for maintaining in position the coil 11. For example 0,5 mm gap can be set between each adjacent loop of the coil 11. Also here, the copper wire can have a 0,2 mm diameter and the winding can have a thickness of 3 mm.

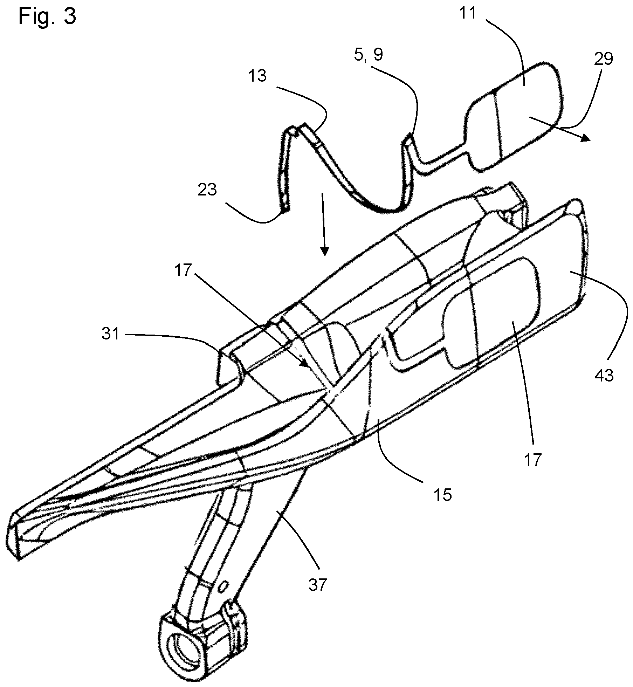

According to a third possibility depicted on figure 3, the antenna 9 is constituted by a flexible printed circuit board including a substrate and conductive tracks defining the coil 11 and the elongated connection part 13.

More generally, the cooperation extremity 23 of the elongated connection part 13 has two terminals configured to cooperate with the microchip 7, for example by a welding.

The reception area 17 for the antenna is a trench made in the body 15.

As illustrated in figures 3 to 5, the body 15 comprises a bridge 31 configured to cooperate with a superior edge 33 of the car door 3 extending according to a basis plane 35, the body 15 also including a foot 37 linked to the bridge 31 and located in an interior side of the car with respect to the superior edge 33.

As shown on figure 5, a rigid printed circuit board 39 of the handle 1 is mounted on the foot 37, said rigid printed circuit board 39 supporting the microchip 7.

The position of the foot 37 enables to protect the microchip 7 of the antenna 9. The foot 37 comprises a cover 41 for protecting the rigid printed circuit board 39.

The body 15 comprises a wing 43 linked to the bridge 31 and located in an exterior side of the car with respect to the superior edge 33, the reception area 17 being located partially on the wing 43, among other things for receiving the coil 11.

As the microchip 7 is not located on the wing 43 of the handle 1 that is manipulated by the user, the wing 43 can be thin.

The wing 43 extends obliquely to or in parallel to the basis plane 35. This facilitates the grabbing of the handle 1. The bridge 31 and the handle 1 can form an elbow.

As illustrated on figure 6, a method for manufacturing of a handle 1 for a car door 3 as described above comprises the following steps:
- E1 providing a body 15, then
- E2 positioning the antenna 9 in the reception area 17 of the body 15, then
- E3 installing the body 15 in a mold, the mold presenting a passage opening 45 represented in figure 5 for inserting the terminal portion 21 outside of a molding area, the passage opening 45 being arranged to be tight when the terminal portion 21 is inserted, then
- E4 creating the overmolded portion 19 by injection within the molding area, then
- E5 fixing the cooperation extremity 23 of the terminal portion 21 to the microchip 7. In particular, the cooperation extremity 23 is welded to the microchip 7 or to the printed circuit board 39,
- E6 coating the overmolded portion 19 and/or on the body 15 with a metal covering layer 25.

The step E6 of coating consists in applying an ink for preventing galvanic process on the free external area 27 and then consists in forming the metal covering layer thanks to a galvanic process.

Alternatively, the metal covering layer 25 can be glued.

The above described handle 1 is advantageous because it implies that the microchip 7 is located remotely from the measuring location that is near the coil 11. The microchip 7 is protected for example from humidity. The handle 1 can present various external forms and can be thin, the coil 11 occupying little space. The coil 11 as a detection part can then be advantageously located for an easy actuating.

There is therefore more freedom for defining the external form of the handle 1 by the combination of the body 15 and the overmolded portion 19. The handle 1 can present a gripping side with a limited thickness.

As goes without saying, the invention is not limited to the sole embodiment described above by way of example, it encompasses all the variants.

## Claims

1. Handle (1) for a car door (3) comprising :
- a near field communication unit (5) having a microchip (7) and an antenna (9), said antenna (9) being provided with a coil (11) and an elongated connection part (13) configured for cooperating with the microchip (7),
- a body (15) configured to be fixed on the car door (3), the body (15) presenting a reception area (17) configured to receive the antenna (9),
- an overmolded portion (19) formed on the body (15) and defining an encapsulating zone including entirely the coil (11) and partially the elongated connection part (13), the elongated connection part (13) comprising a terminal portion (21) including a cooperation extremity (23) configured to cooperate with the microchip (7), said terminal portion (21) being outside the encapsulated zone.

2. Handle (1) according to claim 1, also comprising a metal covering layer (25) formed on the overmolded portion (19) and/or on the body (15), the overmolded portion (19) presenting a free external area (27) in front of the coil (11) according to a winding axis (29) of the coil (11) so as to allow near field communication exchanges.

3. Handle (1) according to claim 2, wherein the metal covering layer (25) is a chromed layer.

4. Handle (1) according to one of the claims 1 to 3, wherein the antenna (9) is constituted by a copper wire forming the coil (11) and the elongated connection part (13), said wire comprising two extremities configured to be welded to the microchip (7) or to the printed circuit board (39).

5. Handle (1) according to one of the claims 1 to 3, wherein the antenna (9) is constituted by a copper wire forming the coil (11) and the elongated connection part (13) and a neutral material frame supporting the coil (11) and/or the elongated connection part (13).

6. Handle (1) according to one of the claims 1 to 3, wherein the antenna (9) is constituted by a flexible printed circuit board including a substrate and conductive tracks defining the coil (11) and the elongated connection part (13).

7. Handle (1) according to one of the claims 1 to 6, wherein the reception area (17) for the antenna (9) is a trench made in the body (15).

8. Handle (1) according to one of the claims 1 to 7, wherein the body (15) comprises a bridge (31) configured to cooperate with a superior edge (33) of the car door (3) extending according to a basis plane (35), the body (15) also including a foot (37) linked to the bridge (31) and located in an interior side of the car with respect to the superior edge (33), a rigid printed circuit board (39) of the handle (1) being mounted on the foot (37), said rigid printed circuit board (39) supporting the microchip (7).

9. Handle (1) according to claim 8, wherein the body (15) comprises a wing (43) linked to the bridge (31) and located in an exterior side of the car with respect to the superior edge (33), the reception area (17) being located partially on the wing (43), in particular for receiving the coil (11).

10. Method for manufacturing of a handle (1) for a car door (3) according to one of the claims 1 to 9, comprising the following steps:
- (E1) providing the body (15), then
- (E2) positioning the antenna (9) in the reception area (17) of the body (15), then
- (E3) installing the body (15) in a mold, the mold presenting a passage opening (45) for inserting the terminal portion (21) outside of a molding area, the passage opening (45) being arranged to be tight when the terminal portion (21) is inserted, then
- (E4) creating the overmolded portion (19) by injection within the molding area.

11. Method for manufacturing according to claim 10, further comprising:
- a step (E5) of fixing the cooperation extremity (23) of the terminal portion (21) to the microchip (21), in particular by welding,
- a step (E6) of coating the overmolded portion (19) and/or on the body (15) with a metal covering layer (25).

12. Method for manufacturing according to claim 11, wherein the step (E6) of coating consists in applying an ink for preventing galvanic process on the free external area (27) and then consists in forming the metal covering layer (25) thanks to a galvanic process.
